# EUROPEAN PATENT APPLICATION

(11) **EP 3 572 305 A1**
(43) Date of publication of application: **27.11.2019**
(21) Application number: 19174498.6
(22) Date of filing: 14.05.2019
(51) Int. Cl.: B62D 21/20, B62D 43/10

(54) **CARAVAN CHASSIS**

(30) Priority: 25.05.2018 GB 201808614
(71) Applicant: Swift Group Limited, Cottingham, East Yorkshire HU16 4JX (GB)
(72) Inventor: CUNNINGHAM, Paul, Cottingham, East Yorkshire HU16 4JX (GB)
(74) Representative: Appleyard Lees IP LLP

(57) **Abstract**

A chassis (10) for a caravan comprising a front floor portion (12), a rear floor portion (14) and an intermediate portion (16). The front floor portion (12) and the rear floor portion (14) provide a floor for the caravan. The intermediate portion (16) is provided between the front floor portion (12) and the rear floor portion (14) and provides a floor for the caravan. The intermediate portion (16) is adapted to have running gear mounted thereto.

## Description

The present invention is related to a chassis for a caravan.

A conventional caravan chassis is a galvanised pressed steel chassis comprising two main longitudinal members, which carry a main axle tube. The main axle tube houses the suspension and swing arms, along with dampers. The main longitudinal members typically have two pressed galvanised steel extension pieces bolted to them at the rear, which provide the location for rear corner steadies. Two cranked pressed steel drawbar members bolt to the two main longitudinal members and meet at the front of the chassis to form an attachment for the over-run device and coupling head. A floor structure for the caravan is typically bolted and/or adhered to the chassis.

Disadvantages associated with a conventional caravan chassis include there being many component parts, such that the assembly process is complex. Furthermore, a conventional caravan chassis can be very heavy. It is desirable to reduce the weight of a caravan chassis, and reduce the number of component parts forming the chassis.

According to the present invention there is provided an apparatus and method as set forth in the appended claims. Other features of the invention will be apparent from the dependent claims, and the description which follows.

According to a first aspect of the invention there is provided a chassis for a caravan comprising a front floor portion, a rear floor portion and an intermediate portion, the front floor portion and the rear floor portion providing a floor for the caravan, wherein the intermediate portion is provided between the front floor portion and the rear floor portion. The intermediate portion provides a flood for the caravan. The intermediate portion is adapted to have running gear mounted thereto.

The chassis provides the advantage that the caravan floor is incorporated in the chassis. This reduces the number of component parts forming the caravan floor and chassis. Further, the weight of the chassis is greatly reduced in comparison to conventional caravans in which the chassis comprises steel longitudinal beams, and the caravan floor is attached to the chassis. The floor structure may make use of interior system elements (such as furniture) to increase its overall stiffness and strength.

The front, rear and intermediate floor portions providing the floor for the caravan is advantageous because it allows the floor of the caravan to be lower than in conventional caravans, thereby lowering the centre of gravity of the caravan and improving stability. The lowering of the floor is achieved by removal of the deep longitudinal and cranked chassis members.

The intermediate portion may comprise a tub. The tub may be generally concave, with a substantially flat base surface and an opening. The opening may be on a top face, or a bottom face, or both faces of the tub. The bottom surface of the base of the tub may extend below bottom surfaces of the front floor portion and rear floor portion, and thus may be closer to the ground in use than the bottom surfaces of the front floor portion and rear floor portion. The tub may be insulated.

The tub may provide storage for the caravan. The tub may be for housing services for the caravan. The services housed in the intermediate portion may be at least one of a device for generating hot water, a device for heating the vehicle, one or more batteries, a battery charging device or devices, an electrical power unit, an electrical transformer and/or inverter, one or more water storage vessels, a powered motorised moving device, air compressors, a spare wheel, a tyre inflation system, one or more fuel cells and a liquid petroleum gas tank. The batteries may support both habitation and traction (for example, electric drive).

The tub provides the advantage that additional storage space is provided in the caravan. The position of the tub in the chassis, with the base of the tub extending below the bottom surfaces of the front floor portion and rear floor portion provides the advantage that the centre of gravity of a caravan comprising the chassis is lowered and thus stability of the caravan is improved.

The intermediate portion may comprise a cover. The cover may be for covering the tub. The cover may be a removable lid or hatch. The cover may be on a top face, or a bottom face, or both faces of the intermediate portion. The cover may form part of a floor of the caravan. The cover may be insulated. When the cover is situated on the bottom face of the intermediate portion, the cover may be lowered using a simple mechanism or guiderails.

An upper surface of the cover may be substantially coplanar with upper surfaces of the front floor portion and the rear floor portion. This allows the floor to be level across the front floor portion, intermediate floor portion and rear floor portion.

The intermediate portion may be a moulded portion, which may be formed as a unitary body. The intermediate portion may be a mono-cell moulding, preferably formed of resin transfer moulding (RTM) or thermoformed composite sheet. The intermediate portion may be a composite portion. Alternatively, the intermediate portion may be formed of metal, for example fabricated from sheet metal. The intermediate portion may be fabricated as a composite sandwich structure jointed with extrusions. These extrusions may be, for example, metallic or composite pultruded.

The front floor portion may be manufactured in various different lengths. The rear floor portion may be manufactured in various different lengths. This provides the advantage that the caravan chassis of various different lengths can be manufactured using the same moulding for the intermediate portion, and using different lengths of front floor portion and rear floor portion.

The front floor portion may be a composite panel, preferably a sandwich panel. The sandwich panel may be a laminated, pultruded or stitched sandwich panel. Alternatively, the front floor portion may be a resin transfer moulding (RTM) panel or thermoformed composite sheet. The RTM panel may comprise a stiffener, preferably a longitudinal stiffener.

The rear floor portion may be a composite panel, preferably a sandwich panel. The sandwich panel may be a laminated, pultruded or stitched sandwich panel.

The composite rear floor portion, and composite or RTM front floor portion provide the advantage that the weight of the chassis is reduced, whilst the floor portions provide the necessary strength for the chassis. The feature of the sandwich panel being a stitched sandwich panel provides the advantage that the floor portion has increased strength.

The intermediate portion may be formed of a non-hygroscopic material. The intermediate portion may be fire-resistant. The intermediate portion may be formed of a material that is resistant to stone chips and impacts. The intermediate portion may have acid resistant properties.

The intermediate portion may be substantially central in the chassis, in a longitudinal direction. The intermediate portion may extend across the width of the chassis. This may provide the advantage of assisting with weight distribution and vehicle balance.

The intermediate portion may be configured to have the running gear mounted directly to the intermediate portion. The intermediate portion may be configured to have running gear to suit single and tandem wheel setups mounted thereto. The intermediate portion may comprise fixing plate, for the mounting of running gear or other fixings. The fixing plate may be embedded in a surface of the intermediate portion.

The intermediate portion may be attached to the front floor portion and the rear floor portion. The intermediate portion may be attached to the front and rear floor portions by means of any or any combination of bonding, or welding, or mechanical fixings.

The height of the chassis may be adjustable, that is the distance between the bottom surface of the front and rear floor portions and the floor may be adjustable.

The intermediate portion may comprise a recessed area on each side of the tub, for accommodating wheels of the caravan. The intermediate portion may comprise wheel arches that may extend over the recessed areas. The intermediate portion may be configured to manage airflow around wheel arches and on an underside of a caravan.

The chassis may comprise mud flaps and/or stone guards for protecting wheels of a caravan from spray, mud and stones. The mud flaps and/or stone guards may be unitary with the intermediate portion. Alternatively, the mud flaps and/or stone guards may be removably attachable to the intermediate portion.

The chassis may comprise location and attachment points for jacking a vehicle. The location and attachment points may be unitary with the intermediate portion, and may be formed in the moulding process of forming the intermediate portion. The intermediate portion may have attachment points for separate bracketry or moulding.

The intermediate portion may comprise a multi-functional structural battery. Battery chemistry may be incorporated into the composite structure of the intermediate portion. The intermediate portion may comprise over-moulded battery cells.

The intermediate portion may be configured to have mounted thereto at least one of: a suspension system, independent stub axles and full axles. The intermediate portion may comprise one or more longitudinal members, preferably two longitudinal members. The longitudinal members may be rigid and may be composite, aluminium, alloy or steel members. The longitudinal members may be for housing the suspension system, stub axle and/or hub assemblies.

The intermediate portion may comprise a levelling device, preferably a self-levelling device. Alternatively, the intermediate portion may be configured for a self-levelling device to be mounted to the intermediate portion. The self-levelling device may be for levelling the chassis in the width direction and the length direction.

The chassis may comprise a drawbar or overrun device. The drawbar or overrun device may comprise a coupling head. The coupling head may be for coupling the chassis to a towing vehicle, such as a car.

The drawbar or overrun device may be mounted directly to the front floor portion. Alternatively, the drawbar may be attached to a connector. The connector may be provided between the drawbar and the intermediate portion. Alternatively, the connector may be connected to the draw bar and may be connectable to an axle. The connector may be a longitudinal connector. The connector may be a rigid longitudinal connector. The connector may be formed of composite material or aluminium or metal alloy or steel. The connector may be fabricated, extruded, pressed or pultruded in its manufacture. The connector may be configured to absorb energy in the event of a vehicle collision.

The drawbar/overrun device may comprise a front wheel. The front wheel may be retractable. The front wheel may be configured to fold or be raised within the caravan that comprises the chassis.

The chassis may comprise means for steadying the caravan, for example when the caravan is not coupled to a towing vehicle. The means for steadying the caravan may be one or more corner steadies. The corner steadies may be mounted to the front floor portion and/or the rear floor portion. There may be provided two corner steadies attached to respective two front corners of the front floor portion. There may be provided two rear corner steadies attached to respective two rear corners of the rear floor portion. The corner steadies may take the form of legs, and may be configured to move between a position in which the legs lie substantially parallel with the bottom surfaces of the front floor portion and rear floor portion, and a position in which the legs lie substantially perpendicular to the bottom surfaces of the front floor portion and the rear floor portion. The corner steadies may be pivotally mounted to the front floor portion and rear floor portion.

The corner steadies may be self-levelling. The corner-steadies may be individually or collaboratively self-levelling.

According to another aspect of the invention there is provided a caravan comprising a chassis and an axle, wherein the chassis comprises a front floor portion, a rear floor portion and an intermediate portion, the front floor portion and the rear floor portion providing a floor for the caravan, wherein the intermediate portion is provided between the front floor portion and the rear floor portion and wherein the axle is mounted to the intermediate portion.

The chassis may comprise any of the features provided above in relation to the first aspect of the invention.

According to another aspect of the invention there is provided a motorhome comprising a chassis and an axle, wherein the chassis comprises a front floor portion, a rear floor portion and an intermediate portion, wherein the intermediate portion is provided between the front floor portion and the rear floor portion, and wherein the front floor portion and the rear floor portion form a floor of the motorhome, and wherein the chassis is attachable to a traction unit.

The chassis may comprise any of the features provided above in relation to the first aspect of the invention.

Although a few preferred embodiments of the present invention have been shown and described, it will be appreciated by those skilled in the art that various changes and modifications might be made without departing from the scope of the invention, as defined in the appended claims.

For a better understanding of the invention, and to show how embodiments of the same may be carried into effect, reference will now be made, by way of example only, to the accompanying diagrammatic drawings in which:
Figure 1 shows a perspective view of a caravan chassis;
Figure 2 section view of part of the chassis;
Figure 3 shows the intermediate portion of the caravan chassis;
Figure 4 shows another example of an intermediate portion;
Figure 5 shows an example of an intermediate portion housing caravan services;
Figure 6 shows an example of an intermediate portion providing storage;
Figure 7 shows an example of an intermediate portion housing a spare wheel;
Figure 8 shows the caravan chassis with stub axles;
Figure 9 shows the caravan chassis with two full axles;
Figure 10 shows the caravan chassis with longitudinal members;
Figure 11 shows a drawbar mounted to the caravan chassis;
Figure 12 shows a caravan chassis with a longitudinal connector;
Figure 13 shows another caravan chassis with a longitudinal connector;
Figure 14 shows an underside view of a front of a chassis;
Figure 15 shows an underside view of a rear of a chassis;
Figure 16 shows a perspective view of the exploded caravan chassis with another example of an intermediate portion providing storage;
Figure 17 shows a perspective view of the caravan chassis with the intermediate portion of figure 16 providing storage; and
Figure 18 shows a perspective view of the underside of the caravan chassis with the intermediate portion of figure 16 providing storage.

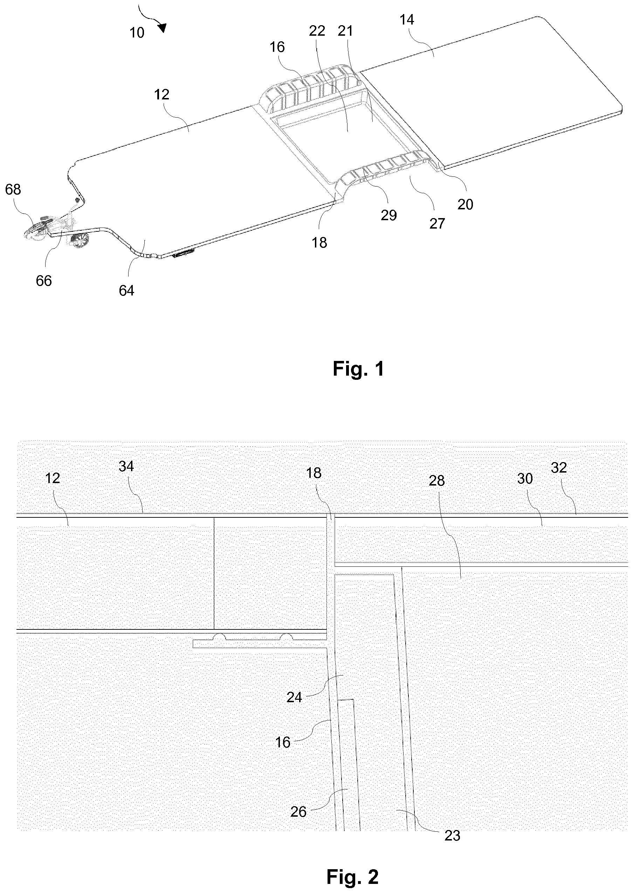

As shown in figure 1, a caravan chassis 10 comprises a front floor portion 12, a rear floor portion 14 and an intermediate portion 16. The intermediate portion 16 is provided between the front floor portion 12 and the rear floor portion 14, where front and rear directions are relative to a normal direction of travel of the chassis in use. The front floor portion 12, the rear floor portion 14 and the intermediate portion 16 are all of the same width, and form the width of a caravan.

The front and rear floor portions 12, 14 are substantially flat panels that form the floor of the caravan. The upper surfaces of the front and rear floor portions are substantially planar, such that the floor in the caravan is substantially planar.

As shown in figure 2, the front floor portion 12 is a structural sandwich panel. The rear floor portion 14 is also a structural sandwich panel. The front floor portion 12 could alternatively be a resin transfer moulding, with a longitudinal stiffener. The front floor portion 12 and the rear floor portion 14 and provide the necessary structural strength to support the body of the caravan.

A front edge 18 of the intermediate portion 16 is attached to the front floor portion 12, and a rear edge 20 of the intermediate portion 16 is attached to the rear floor portion 14. The intermediate portion 16 is attached to the front and rear floor portions 12, 14 by welding, bonding or mechanical fixings.

As shown in figures 1-3, the intermediate portion 16 comprises a tub 21 with a large flat base 22 a front wall 23, rear wall and side walls. The intermediate portion 16 is formed from composite material with an insulated core 24. The intermediate portion 16 comprises a fixing plate 26, provided in the front wall 23. The fixing plate 26 provides attachment points for fixings.

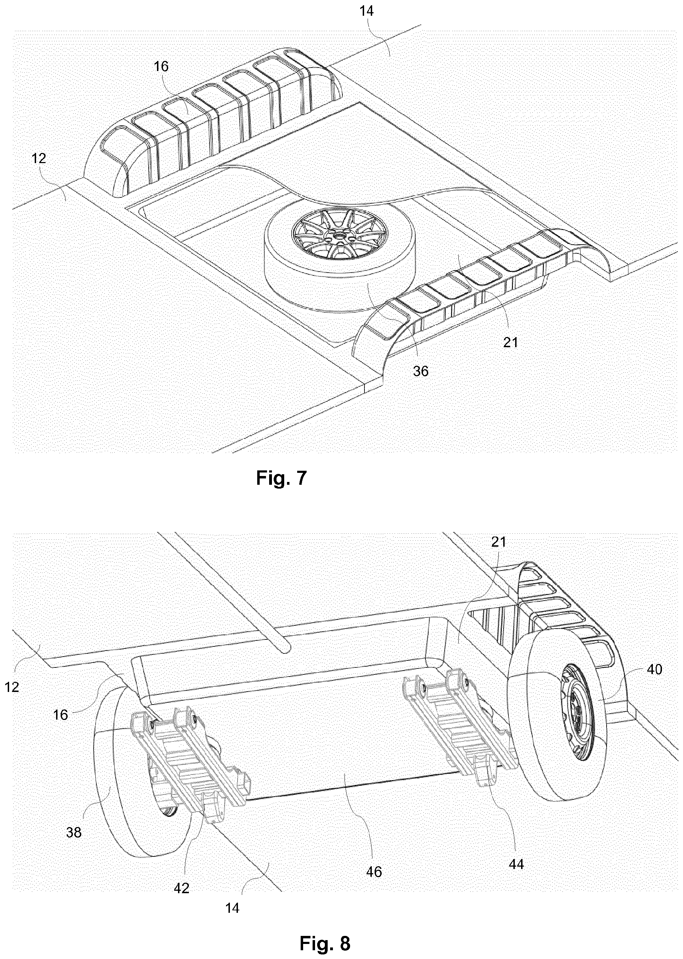

The intermediate portion comprises recessed areas 27 in which at least one wheel can be provided, as shown in figures 8-10. The length of the recessed areas 27 is configured for receiving two wheels, such that the chassis 10 can be used for a single axle caravan or a dual-axle caravan. The recessed areas 27 are provided at left and right sides of the tub 21, relative to the direction of travel. The recessed areas 27 are covered by wheel arches 29 that are integral with the intermediate portion 16.

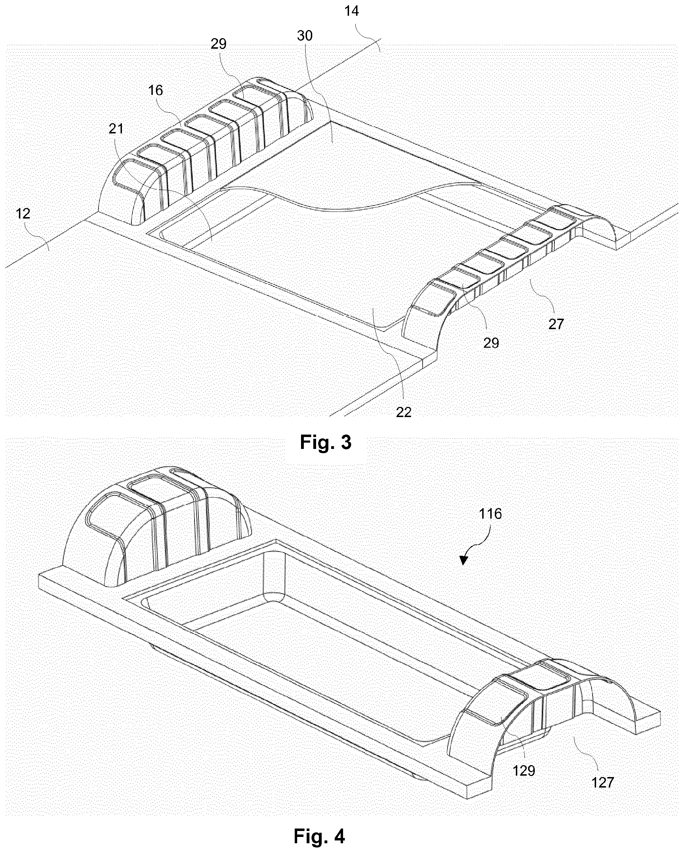

The intermediate portion 16 comprises an opening 28 for accessing the tub 21. The opening can be covered with a cover 30. As shown in figures 2 and 3, the upper surface 32 of the cover 30 lies in plane with the upper surface 34 of the front floor portion and the cover 30 forms part of the floor of the caravan. The cover 30 is removable to provide access into the tub 21.

Figure 4 shows another example of an intermediate portion 116 that is attachable to the front and rear floor portions to form a caravan chassis. The lengths of the recesses 127 and wheel arches 129 of the intermediate portion 116 in the direction of travel are shorter than those for the intermediate portion 16 shown in figures 1-3. The intermediate portion 116 is configured for a single-axle caravan.

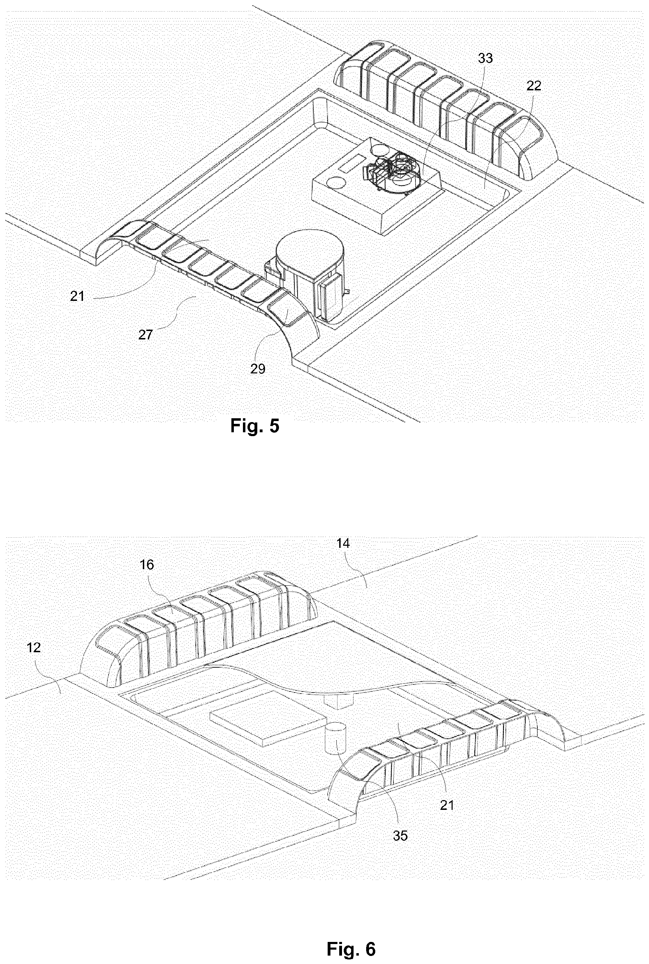

The tub 21 can be used to house caravan services 33, as shown in figure 5, or can be used to provide storage, for example for storing items 35 for use in the caravan, as shown in figure 6, or a spare wheel 36, as shown in figure 7.

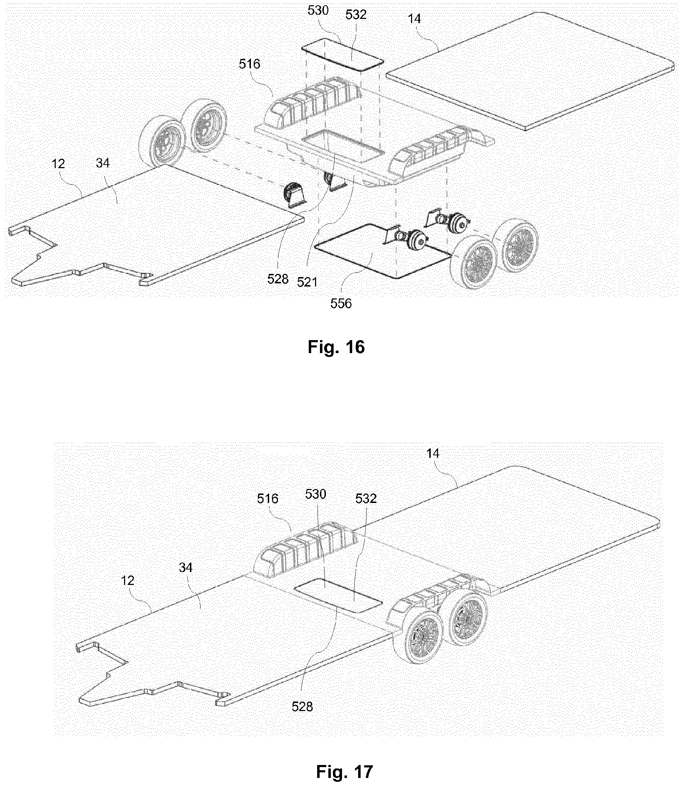

Figures 16-18 show another example of an intermediate portion 516, which is attachable to front and rear floor portions 12, 14 as described above to form a caravan chassis. The intermediate portion 516 comprises a tub 521 with a large flat base 522, a front wall, a rear wall and side walls.

The intermediate portion 516 comprises an opening 528 for accessing the tub 521. The opening can be covered with a cover 530. As shown in figures 16 and 17, the upper surface 532 of the cover 530 lies in plane with the upper surface 34 of the front floor portion and the cover 530 forms part of the floor of the caravan. The cover 530 is removable to provide access into the tub 521.

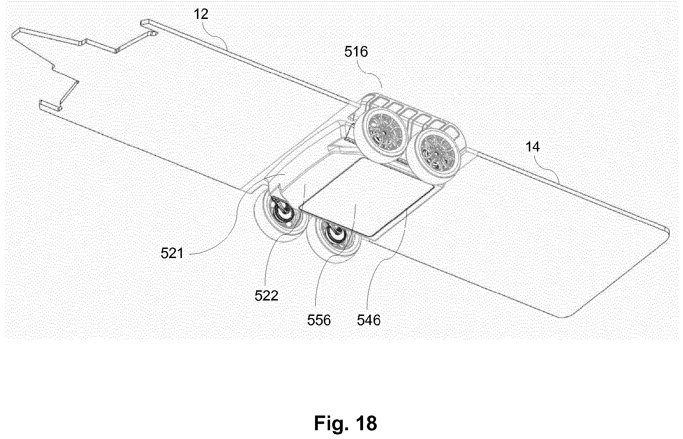

The intermediate portion 516 comprises an opening 546 on the flat base 522 of the tub 521. The opening 546 can be covered with a cover 556. As shown in figure 18, the lower surface of the cover 556 lies in plane with the lower surface of the flat base 522 of the tub 521.

The tub 521 can be used to provide storage; for example, to house caravan services, to store items or to store a spare wheel.

Figure 8 shows an underside view of the chassis 10, with wheels 38, 40 mounted for a single axle caravan. First and second independent stub axles 42, 44 are mounted to the bottom surface 46 of the tub 21, and the wheels 38, 40 are attached to the stub axles 42, 44.

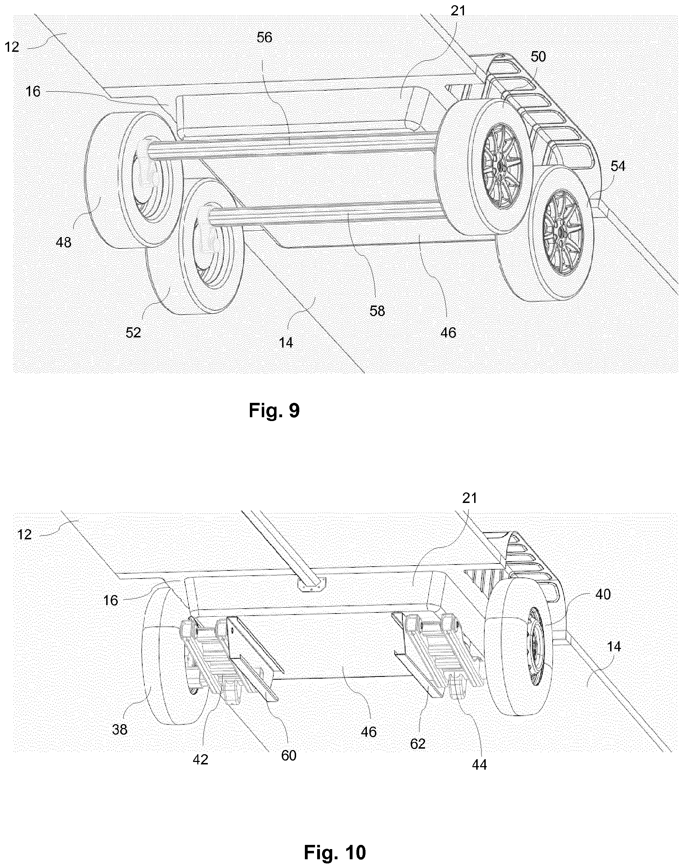

Figure 9 shows an underside view of the chassis 10, with wheels 48, 50, 52, 54 for a twin-axle caravan. A front full axle 56 and a rear full axle 58 are attached to the bottom surface 46 of the intermediate portion 16. The front wheels 48, 50 are mounted to the front axle 56 and the rear wheels 52, 54 are mounted to the rear axle 58.

As shown in figure 10, rigid longitudinal members 60, 62 can be mounted to the bottom surface 46 of the intermediate portion 16. The longitudinal members 60, 62 extend in the length direction of the intermediate portion 16, and are for housing the stub axles 42, 44.

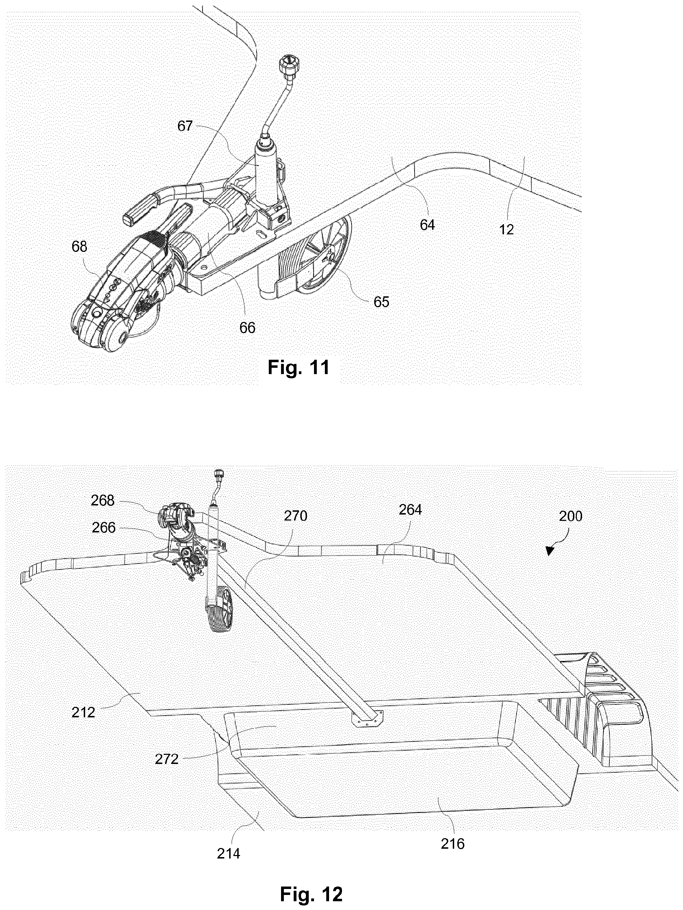

As shown in figures 1 and 11, at a front end 64 of the front floor portion 12, there is provided a drawbar 66 and coupling head 68 for attaching the chassis for a towing vehicle. The drawbar 66 is directly mounted to the front floor portion 12.

As shown in figures 1 and 11, the drawbar 66 comprises a retractable front wheel 65. The retractable wheel is attached to a bar 67 which extends through the front end 64 of the front floor portion 12. The drawbar 64 comprises adjustment means to allow the height of the retractable wheel 65 relative to the front floor portion 12 to be adjusted. The retractable wheel 65 can be lowered to contact the ground when the caravan is not being towed by a vehicle, and can be raised from the ground when the caravan is being towed.

Figure 12 shows another example of a caravan chassis 200. The caravan chassis comprises a front floor portion 212, a rear floor portion 214 and an intermediate portion 216 that are substantially the same as the front floor portion 12, the rear floor portion 14 and the intermediate floor portion 16 of the chassis 10 shown in figure 1. However, the chassis 200 comprises a drawbar 266 and coupling head 268 that are connected to the intermediate portion 216 by a rigid longitudinal connector 270 that extends underneath the front floor portion 212, from the front end 264 of the front floor portion 212. The longitudinal connector 270 is attached to a front wall 272 of the intermediate portion 216.

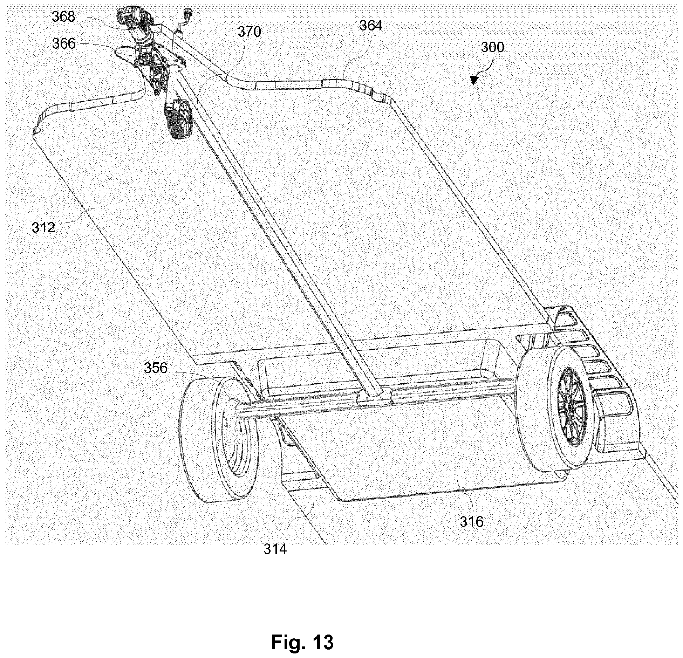

Figure 13 shows another example of a caravan chassis 300. The caravan chassis 300 comprises a front floor portion 312, a rear floor portion 314 and an intermediate portion 316 that are substantially the same as the front floor portion 12, the rear floor portion 14 and the intermediate floor portion 16 of the chassis 10 shown in figure 1. However, the caravan chassis 300 comprises a draw bar 366 and coupling head 368 that are connected to the axle 356 by a rigid longitudinal connector 370 that extends underneath the front floor portion 312 from a front end 364 of the front floor portion.

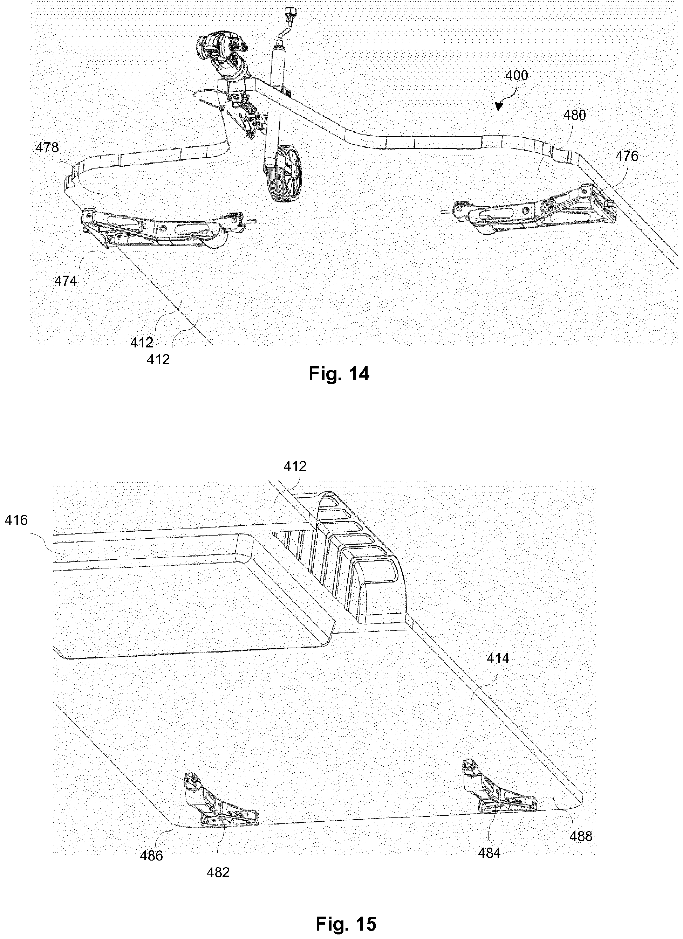

Figures 14 and 15 shows another example of a caravan chassis 400. The chassis 400 comprises a front floor portion 412, a rear floor portion 414 and an intermediate portion 416 that are substantially the same as the front floor portion 12, the rear floor portion 14 and the intermediate floor portion 16 of the chassis 10 shown in figure 1.

Corner steadies are mounted to the bottom surface of the chassis 400. Front corner steadies 474, 476 are mounted to the bottom surface of the front floor portion 412 at front corners 478, 480 and rear corner steadies 482, 484 are mounted to the bottom surface of the rear floor portion 414 at rear corners 486, 488. The corner steadies 474, 476, 483, 484 are configured to fold out from a position in which they lie parallel to the front and rear floor portions, as shown in figures 14 and 15, to a position in which they lie substantially perpendicular to the bottom surface of the front and rear floor portions 412, 414, to support the caravan when it is not being moved.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A chassis for a caravan comprising a front floor portion, a rear floor portion and an intermediate portion, the front floor portion and the rear floor portion providing a floor for the caravan,
wherein the intermediate portion is provided between the front floor portion and the rear floor portion,
wherein the intermediate portion provides a floor for the caravan, and
wherein the intermediate portion is adapted to have running gear mounted thereto.

2. The chassis according to claim 1, wherein the intermediate portion comprises a tub, the tub being configured to provide storage for the caravan.

3. The chassis according to claim 2, wherein the tub comprises a substantially flat base that extends below bottom surfaces of the front floor portion and rear floor portion.

4. The chassis according to claim 2 or claim 3, wherein the intermediate portion comprises a cover for covering the tub, the cover forming a part of the floor for the caravan.

5. The chassis according to any of claims 2 to 4, wherein intermediate portion comprises recessed areas on first and second sides of the tub, for accommodating wheels of the caravan.

6. The chassis according to claim 5, wherein the intermediate portion comprises wheel arches that extend over the recessed areas.

7. The chassis according to any of claims 3 to 5, wherein the substantially flat base of the tub comprises an opening.

8. The chassis according to any preceding claim, wherein the intermediate portion is a moulded portion, a composite portion, or is formed of metal.

9. The chassis according to any preceding claim, wherein the front floor portion is a composite panel or is a resin transfer moulding panel.

10. The chassis according to any preceding claim, wherein the rear floor portion is a composite panel.

11. The chassis according to any preceding claim, wherein the intermediate portion is configured to have the axle mounted directly to the intermediate portion.

12. The chassis according to any preceding claim, wherein the intermediate portion comprises a multi-functional structural battery.

13. The chassis according to any preceding claim, further comprising a drawbar or overrun device and a coupling head for coupling the chassis to a towing vehicle.

14. The chassis according to any preceding claim, further comprising means for steadying the caravan mounted to the front floor portion and the rear floor portion.

15. A caravan comprising the chassis according to any preceding claim.
